# EUROPEAN PATENT APPLICATION

(11) **EP 1 435 272 A1**
(43) Date of publication of application: **07.07.2004**
(21) Application number: 03385005.8
(22) Date of filing: 21.11.2003
(51) Int. Cl.: B23B 51/04

(54) **Drill bit to take out rawlplugs**

(30) Priority: 22.11.2002 ES 200202821
(71) Applicant: Settier Fornes, Antonio, 46020 Valencia (ES)
(72) Inventor: Settier Fornes, Antonio, 46020 Valencia (ES)

(57) **Abstract**

This new drill bit is made up a hollow tube with flat walls (1 and 2), which fits into the power drill at its flat end (3), leaving the indented end free for the extraction of headless screws (4). Its teeth show the cutting edge (6) in the direction of the turn of the drill bit.

## Description

### DESCRIPTION OF DE INVENTION

The aim of the present invention, as said in the statement of this descriptive memo, is to extract rawlplugs with headless screws, so it can be referred to as the DRILL BIT TO TAKE OUT RAWLPLUGS.

The extraction of headless screws has been difficult so far due to the nature of rawlplugs, and it has generally been done manually. This new rawlplugs-extraction drill bit allows a faster and safer extraction as its fits into a power drill.

This new extractor drill bit is a cylindrical hollow element, which has flat walls and an indented edge at one end. The new drill bit fits into a power drill at the flat end, and when it is working it makes the indented edge rotate, taking out the screw and cutting out the rawlplug that contains it. Once the screw has been extracted, it is kept in the cylindrical body of the drill bit and it can be taken out of it by a little push. So the drill bit can be used again.

This new shape satisfies the technical requirements of any user, since it makes the extraction of headless screws easier, reducing meaningfully the time this operation can take.

### DESCRIPTION OF THE DRAWINGS

In order to show what we have said above, we include a sheet with the pictures that show in a simple and clear way how the drill bit operates, which is in fact a practical example of the countless possibilities of this invention.

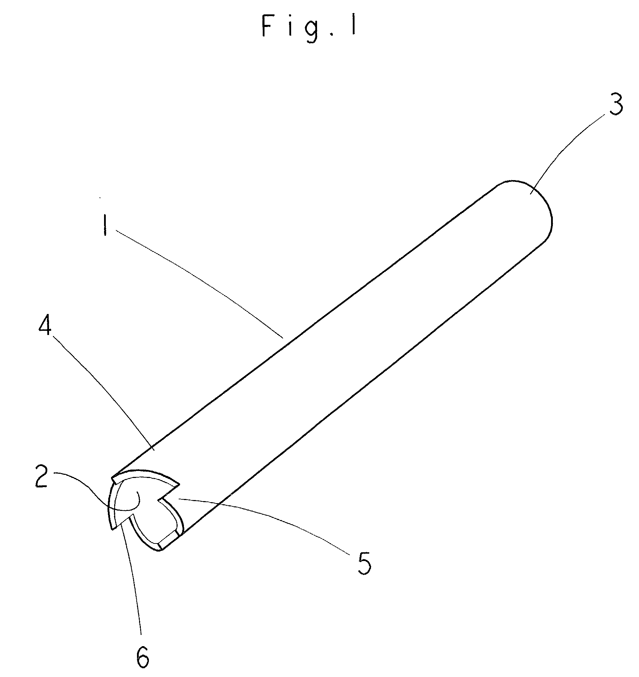

In this sheet figure n° 1 shows a perspective view where we can see the features of this new drill bit.

### DESCRIPTION OF THE SAMPLE CASE

This new drill bit is made up of a hollow tube with flat walls (1 and 2), which fits into the power drill at its flat end (3), leaving the indented end free for the extraction of headless screws (4). Its teeth (5) show the cutting edge (6) in the direction of the turn of the drill bit.

Once we have defined the concept, we will write an account of claims, summarizing the new features which we would like to claim:

## Claims

1. **" RAWLPLUG-EXTRACTOR DRILL BIT "**, of a type consisting of a hollow cylindrical body with flat walls (1 and 2) and having an indented edge at one of its ends (4).

2. **" RAWLPLUG-EXTRACTOR DRILL BIT ",** according to the preceding claim, its cutting edge is pointing towards the right or the left.

3. **" RAWLPLUG-EXTRACTOR DRILL BIT ",** according to the first claim, the teeth of its indented end are inserted between a cutting edge towards the left and another one towards the right.
